# EUROPEAN PATENT SPECIFICATION

(11) **EP 1 469 740 B1**
(45) Date of publication and mention of the grant of the patent: **21.05.2008**
(21) Application number: 03701945.2
(22) Date of filing: 28.01.2003
(51) Int. Cl.: A23J 1/06, A23J 3/12, A23L 1/31, A23L 1/314, A23L 1/325, A23L 1/317, A21D 2/26, A22C 13/00

(54) **METHOD FOR PREPARING A BLOOD PLASMA POWDER AND USES THEREOF**
VERFAHREN ZUR HERSTELLUNG EINES BLUTPLASMAPULVERS UND ANWENDUNGEN
PROCEDE DE PREPARATION D'UNE POUDRE DE PLASMA SANGUIN ET UTILISATIONS ASSOCIEES

(30) Priority: 31.01.2002 NL 1019873
(43) Date of publication of application: 27.10.2004
(73) Proprietor: Sonac Loenen B.V., 7371 GD Loenen (NL)
(72) Inventor: ROODINK, Hendrikus, Bernardus, Johannes, NL-7391 XP Twello (NL); ZUIJDWEG, Paul, NL-7207 LC Zutphen (NL)
(74) Representative: Valkonet, Rutger
(86) International application number: PCT/NL2003/000056
(87) International publication number: WO 2003/063607

(56) References cited:
- EP-A- 0 201 975
- EP-A- 0 438 196
- NL-A- 9 001 087
- NL-A- 9 401 943
- US-A- 4 347 259
- US-A- 6 113 948
- PATENT ABSTRACTS OF JAPAN vol. 018, no. 351 (C-1220), 4 July 1994 (1994-07-04) & JP 06 090710 A (TAIYO KAGAKU CO LTD), 5 April 1994 (1994-04-05)
- DATABASE WPI Section Ch, Week 198327 Derwent Publications Ltd., London, GB; Class B04, AN 1983-702950 XP002213453 & JP 58 090508 A (GREEN CROSS CORP), 30 May 1983 (1983-05-30) cited in the application
- DATABASE WPI Section Ch, Week 199633 Derwent Publications Ltd., London, GB; Class B04, AN 1996-329428 XP002213454 & JP 08 151330 A (GREEN CROSS CORP), 11 June 1996 (1996-06-11) cited in the application
- PATENT ABSTRACTS OF JAPAN vol. 018, no. 288 (C-1207), 2 June 1994 (1994-06-02) & JP 06 054897 A (CHEMO SERO THERAPEUT RES INST), 1 March 1994 (1994-03-01) cited in the application

## Description

The present invention relates to a method for preparing a blood plasma powder.

Methods for preparing blood plasma powder are generally known. However, the blood plasma powders obtained by using prior art methods cannot be used as such in a dry condition in the foodstuffs industry for bonding together pieces of foodstuff, making use of the conversion of the fibrinogen that is present in blood plasma powder into fibrin, or for increasing the consistency of liquid or semi-solid foodstuffs.

For such uses, there is a need for a method for preparing a blood plasma powder, using conditions such that the obtained blood plasma powder has an elevated fibrinogen content compared to known blood plasma powders and that, in addition, the natural functions and activities of the fibrinogen and the other proteins and enzymes present in the blood plasma powder do not deteriorate to any significant degree, but are retained.

The above ,advantages are obtained by the method according to the present invention, which is characterised in that (1) a fibrinogen concentrate having a fibrinogen content of at least 1 percent by weight is prepared from blood plasma, and in that (2) said fibrinogen concentrate is spray-dried to form a powder, apparently intended for use in foodstuffs, in such a manner that the temperature of the fibrinogen itself is maintained at less than 60 °C.

From US-A-364428 and DE-A-3212057 the use of blood plasma powder in sausage making is known.

From Japanese Patent Application JP 06 054897 (Patent Abstracts of Japan), 018, No 288 (C-1207), there is known a method of preparing a human fibrinogen product, in which blood plasma is subjected to glycine fractionation or ethanol fractionation, the obtained fibrinogen solution is freeze-dried, and the product is stored at a reduced pressure. The applications exclusively belong to the medical field.

From Japanese patent application JP 58 090508 (Derwent Publications Ltd, London, GB; XP002213453), there is known a method for preparing a fibrinogen product, in which dried fibrinogen is dissolved in a buffered monosaccharide solution, after which the fibrinogen solution is freeze-dried in an injector. The applications exclusively belong to the clinical field.

From Japanese patent application JP 08 151330 (Derwent Publications Ltd, London, GB; XP002213454), there is known a method for preparing a human fibrinogen product, in which blood plasma is subjected to ethanol fractionation, the isolated fibrinogen solubilised, freeze-dried and heated at 60 °C for 24-96 hours, in order to obtain a fibrinogen preparation which readily dissolves in water. The applications exclusively belong to the medical field.

None of the above references describe the use of a blood plasma powder having an elevated fibrinogen content in the foodstuffs industry.

The powder obtained by using the method according to the present invention can be used for bonding together pieces of foodstuff and for increasing the consistency of liquid or semi-solid foodstuffs. As will be disclosed hereinafter, the powder may even be applied to foodstuffs or be mixed therewith in a dry form, and it has become apparent that the moisture present in the foodstuffs is sufficient for effecting the formation of fibrin, and therefore obtaining a bond or an increase of consistency. Moreover, it has been found that, surprisingly, it is not necessary to add any additional products in order to obtain these effects; in principle, the use of the blood plasma powder according to the present invention as the only component will suffice. Consequently, a few important advantages of the present invention include the fact that a product is obtained which, on account of the dry form thereof, is easier to store (because liquid forms require more precautionary measures), takes up less space and is easier to transport than liquid forms, and in particular the fact that the powder can be used as a single-component system for the aforesaid purposes, in principle without dissolution and reconstitution of the powder to a liquid system and/or the addition of additional substances being required.

The forming of a fibrinogen concentrate from blood plasma ' having a fibrinogen content of at least 1 wt.% (step 1) can be carried out by using, a method which is known as such, for example the method disclosed in EP 0 438 196 (in which - using various temperatures - a fibrinogen concentrate is prepared from and in the blood plasma itself), or a method of fractionating on the basis of the molecular weights, using membrane techniques.

Particularly good results are obtained if the fibrinogen concentrate is spray-dried in a spray-drying apparatus set at temperatures between 70 °C and 200 °C, and the obtained powder is cooled to a temperature of less than 50 °C during less than 5 minutes. Preferably, said spray-drying takes place in a spray-drying apparatus with an inlet temperature of 120-200 °C and an outlet temperature of 70-95 °C. By further shortening the cooling period, the biological properties of the components of the powder are maintained even better, and it is preferred to cool down the blood plasma powder obtained after spray-drying to a temperature of less than 50 °C during a period of less than 45 seconds.

As explained above, the powder obtained by using the present method can be used in a dry form. However, for certain applications it may be desirable to use a liquid form, in which cases the power must be dissolved before use. In principle, the powder can practically completely be dissolved in an aqueous solvent, the solubility being higher than 95%. Thus, by way of example, solutions of 10-13 wt.% of the powder can be prepared, which solutions have a fibrinogen content corresponding to the fibrinogen content of the fibrinogen concentrate.

In order to accelerate the dissolving of the powder, the powder particles can be enlarged. It is possible to use agglomeration techniques for this purpose, and it is preferred to fluidise the blood plasma powder and to moisten it with water, after which the water is evaporated from the thus obtained agglomerated powder particles, with process temperatures of 15-120 °C being used. Process temperatures of 30-80 °C are preferred. The solution properties of the powder can be further enhanced by adding to the water a binder selected from the group of sugars, proteins or lecithins.

The present invention also relates to a method of bonding together pieces of foodstuff, using fibrinogen.

Such a method is known from EP 0 201 975. However, according to this prior art method, liquid fibrinogen concentrates are used. Among the associated drawbacks thereof is the fact that, for storing liquid forms, laborious precautionary measures must be taken (for example in connection with preventing bacterial contamination and maintaining a low temperature). In addition, liquid forms take up more space, and they must be packed and transported in special containers. Furthermore, the known fibrinogen concentrate is not a single-component system.

The method for bonding together pieces of foodstuff, using fibrinogen, according to the present invention is characterised in that dry blood plasma powder having an elevated fibrinogen content is applied to pieces of foodstuff, after which thus treated the pieces of foodstuff are allowed to rest until they are bonded together.

Surprisingly, it has appeared that it is not necessary to use any additional products for obtaining the desired bonding. The moisture that is present in the foodstuff appears to suffice for effecting the conversion of fibrinogen into fibrin.

An additional important advantage of the present method for bonding together pieces of foodstuff is the fact that said application and said bonding can take place at low temperatures. That is, using a so-called "cold-set" bonding or cold bonding. Consequently, according to a special application of the present method, said application and said bonding take place at a temperature of 0-30 °C.

It has become apparent that the strength of the bonding and the rate of said bonding can be further increased by adding 1-10 wt.% ' calcium chloride to the blood plasma powder, calculated on the basis of the weight of the blood plasma powder.

In principle, various kinds of foodstuffs can be bonded together. According to a preferred method for the foodstuffs industry, pieces of meat of fish are treated with the plasma powder, in particular, they are sprinkled. Within the framework of the present invention, the terms meat and fish do not only include fresh meat and fresh fish, but also products that have been further treated and prepared, such as marinated products. The meat may of course also be obtained from poultry or game. According to a special 1 application of the method according to the invention, pieces of vegetable are bonded together.

The obtained final products comprising bonded-together pieces of meat, fish , and/or vegetable, can be used for various applications in the foodstuffs industry, for example for obtaining new presentation forms and for obtaining uniform portions comprising uniform amounts of ingredients. In the case of pieces having a weight of less than 500 g it is preferred for said pieces to be mixed after being sprinkled and subsequently be placed in a mould , in which the bonding process is to take place. Pieces having a weight of more than 500 g can be placed into contact with each other after being sprinkled, after which the bonding is allowed to take place.

The present invention furthermore relates to a method for increasing the consistency of a liquid or semi-solid foodstuff.

Such a method is generally known, and it frequently comprises the addition of chemical thickening agents.

According to the present invention, the liquid or semi-solid foodstuff is mixed with dry blood plasma powder obtainable by the method of the present invention having an elevated fibrinogen content, after which the foodstuff thus treated is allowed to rest until it has the desired elevated consistency.

The advantage of this method is not only the fact that a natural product is exclusively used, which product can moreover be added in solid form, but also the fact that special forms of products having an elevated consistency can be obtained. In such a case, the obtained products, on account of their elevated consistency, are more suitable for being subjected to a final treatment. Within the framework of the present invention, the term liquid or semi-solid foodstuffs not only a relates to compositions or preparations of food service obtained in advance by reducing, grinding on mixing, but also to liquid foodstuffs, such as dairy products.

According to a particular application, an amount of 5-10 wt.% of blood plasma powder is kneaded into a bread dough, after which the kneaded dough is allowed to rest until it has the desired elevated consistency. According to another application, an amount of 0.1-5 wt.% of blood plasma powder is kneaded into sausage dough, after which the kneaded sausage dough is allowed to rest until it has the desired increased consistency. Furthermore, according to a particular application, an amount of 0.1-10 wt.% of blood plasma powder is kneaded into a collagen paste dough, after which the kneaded dough is allowed to rest until it has the desired increased consistency.

According to an particularly preferred application of the method for increasing the consistency of a liquid or semi-solid foodstuff, dairy products are treated. According to the invention, a foodstuff based on dairy products is mixed with an amount of 0.1-10 wt.% of blood plasma powder, after which the mixture is allowed to rest until > it has the desired increased viscosity and/or consistency. Within the framework of the present invention, the term dairy products not only comprises all forms of milk, but also other products that have been pretreated already, such as yoghurt, for example.

The present invention will be illustrated hereinafter by means of a few examples.

### Example 1.

Starting from blood plasma, a fibrinogen concentrate, i.e. a fibrinogen-enriched plasma, was prepared by using the method described in EP 0 438 196. The fibrinogen content of the concentrate amounted to 4 wt.%. Subsequently, the fibrinogen concentrate was spray-dried under mild conditions. The inlet temperature of the spray-drying apparatus was 135 °C. The outlet temperature of the spray-drier was 80 °C. After spray-drying, the obtained powder was cooled down to room temperature during about 1 minute. The obtained blood plasma powder had a solubility of 97% in a physiological saline solution. According to another application, the spray-dried fibrinogen concentrate was cooled down to a temperature of 10 °C during 30 seconds.

### Example 2.

An amount of blood plasma was concentrated by using filtration under pressure through a membrane (Amicon, brand). The obtained fibrinogen concentrate had a fibrinogen content of 1.5 wt.%. Subsequently, the, fibrinogen concentrate was spray-dried under mild conditions. The inlet temperature of the spray-drying apparatus amounted to 200 °C. The outlet temperature of the spray-drier was 95 °C. The solution was atomized by means of a mixed air nozzle. The blood plasma powder obtained by means of the spray-drying process had a solubility of 96% in an aqueous solution.

### Example 3.

An amount of 500 g of the blood plasma powder obtained by using the method according to Example 1 was fluidised in a fluid bed agglomerator with air at a temperature of 80 °C. Water was contacted with the dried powder particles by atomisation. The thus moisturised powder particles bonded together, thus forming agglomerates of larger particles. The thus agglomerated powder particles dissolved twice as quickly as the powder obtained by using the method according to Example 1. Said dissolving took place even more quickly when sugar was added to the water that was used in the agglomeration process. In a separate experiment, the solubility was improved by adding lecithins to the water that was used in the agglomeration process.

### Example 4.

Pieces of pork meat having a weight of about 100 g were treated by uniformly sprinkling them with an amount of 0.8 wt.%, based on the total weight of the meat, of the blood plasma powder obtained by using the method of Example 2. The sprinkled pieces of meat were mixed and filled into a mould. After 60 minutes, the pieces of meat had sufficiently bonded together to allow further processing and packaging. Similar results were obtained with pieces of marinated fish having a weight of about 50 g. The experiment was repeated with pieces of meat or fish having a weight of approximately 750 g; these large pieces were treated with an amount of 1 wt.% of the blood plasma powder obtained by using the method of Example 2. The pieces were placed into contact with each other until they had sufficiently bonded together.

A quicker and stronger bond was obtained by adding 4 wt.% of calcium chloride to the blood plasma powder. All experiments were carried out at 4 °C, at 15 °C and at 25 °C. In all cases, a satisfactory bond was eventually obtained.

Pre-cooked pieces of carrots and pieces of cauliflower having a weight of about 60 g could be bonded together by mixing the pieces of vegetable with an amount of 0.5 wt.% of freeze-dried blood plasma powder. After a resting period of 1 hour in a mould, the pieces had sufficiently bonded together.

### Comparative Example 5.

An amount of 2 wt.% of blood plasma powder was added to a bread dough, after which the whole was kneaded to obtain a homogeneous mass. After a period of rest of 16 minutes at 30 °C, the consistency of the dough was better than that of a bread dough obtained without added blood plasma powder. Subsequently, the dough was kneaded again and put into a baking tin. After a period of rest of 45 minutes at 28 °C, a bread was baked at a temperature of 240 °C for 25 minutes. The obtained bread had a larger volume, it was more elastic and it had a better consistency with a crumb structure and smaller cells than bread prepared without blood plasma powder.

An amount of 1 wt.% of blood plasma powder was added to sausage dough, after which the whole was kneaded to obtain a homogeneous mass. After a period of rest of 90 minutes, the sausage dough was processed into a sausage product. When the sausage was subsequently heated at 90 °C for 45 minutes, the finally obtained sausage showed a higher consistency and improved slicing properties in comparison with sausage products prepared without blood plasma powder.

An amount of 4 wt.% of blood plasma powder was added to a collagen paste dough. After a period of rest of 15 minutes at 18 °C, the elasticity, the viscosity and the resistance of the obtained paste were higher than those of a pasta prepared without blood plasma powder. When the collagen paste obtained by using the blood plasma powder was processed to form an envelope for meat products, in particular a so-called case or skin, the case that was obtained after heating at 100 °C for 16 minutes round a meat preparation of turkey meat showed improved barrier properties and was physically stronger in comparison with a collagen pasta prepared without the addition of blood plasma powder.

An amount of 0.5 wt.% of blood plasma partner was added to milk whilst stirring. After a resting period of 90 minutes, the viscosity of the milk was considerably higher than that of untreated milk. A special form of yoghurt having an increased consistency was obtained by mixing an amount of 2.5 wt.% of blood plasma powder into a commercially available yoghurt, followed by a period of rest of 180 minutes.

## Claims

1. A method for preparing a blood plasma powder, **characterised in that** (1) a fibrinogen concentrate having a fibrinogen content of at least 1 percent by weight is prepared from blood plasma, and **in that** (2) said fibrinogen concentrate is spray-dried to form a powder, apparently intended for use in foodstuffs, in such a manner that the temperature of the fibrinogen itself is maintained at less than 60 °C.

2. Method according to claim 1, **characterised in that** the fibrinogen concentrate is spray-dried in a spray-drying apparatus set at temperatures between 70 °C and 200 °C, and that the obtained powder is cooled to a temperature of less than 50 °C during less than 5 minutes.

3. Method according to claim 2, **characterised in that** said spray-drying takes place in a spray-drying apparatus with an inlet temperature of 120-200 °C and an outlet temperature of 70-95 °C.

4. Method according to claim 2 or claim 3, **characterised in that** the blood plasma powder obtained after spray-drying is cooled down to a temperature of less than 50 °C during less than 45 seconds.

5. Method according to any one of claims 1-4, **characterised in that** the blood plasma powder is fluidised and moistened with water, after which the water is evaporated from the thus obtained agglomerated powder particles, while using process temperatures of 15-120 °C.

6. Method according to claim 5, **characterised in that** process temperatures of 30-80 °C are used.

7. Method according to claim 5 or claim 6, **characterised in that** a binder selected from the group of sugars, proteins or lecithins is added to the water.

8. A method of bonding together pieces of foodstuff, using fibrinogen, **characterised in that** dry blood plasma powder having an elevated fibrinogen content is applied to pieces of foodstuff, after which the thus treated pieces of foodstuff are allowed to rest until they are bonded together.

9. Method according to claim 8, **characterised in that** said application and said bonding are carried out at a temperature of 0-30 °C.

10. Method according to claim 8 or claim 9, **characterised in that** 1-10 percent by weight of calcium chloride, calculated on the basis of the weight of the blood plasma powder, is added to the blood plasma powder.

11. Method according to any one of claims 8-10, **characterised in that** pieces of meat of fish are sprinkled.

12. Method according to any one of claims 8-10, **characterised in that** pieces of vegetable are bonded together.

13. Method according to any one of claims 8-12, **characterised in that**, after being sprinkled, pieces having a weight of less than 500 g are mixed and subsequently placed in a mould, in which the bonding is allowed to take place.

14. Method according to any one of claims 8-12, **characterised in that**, after being sprinkled, pieces having a weight of more than 500 g are placed into contact with each other after which the bonding is allowed to take place.

15. A method of increasing the consistency of a liquid or semi-solid foodstuff, **characterised in that** the liquid or semi-solid foodstuff is mixed with dry blood plasma powder, obtainable by the method of claim 1, having an elevated fibrinogen content, after which the thus treated foodstuff is allowed to rest until it has the desired increased consistency.

16. Method according to claim 15, **characterised in that** 5-10 wt.% of blood plasma powder, obtainable by the method of claim 1, is kneaded into a bread dough, after which the kneaded dough is allowed to rest until it has the desired increased consistency.

17. Method according to claim 15, **characterised in that** 0.1-5 wt.% of blood plasma powder, obtainable by the method of claim 1, is kneaded into sausage dough, after which the kneaded sausage dough is allowed to rest until it has the desired increased consistency.

18. Method according to claim 15, **characterised in that** 0.1-10 wt.% of blood plasma powder, obtainable by the method of claim 1, is kneaded into a collagen paste dough, after which the kneaded dough is allowed to rest until it has the desired increased consistency.

19. Method according to claim 15, **characterised in that** a foodstuff based on dairy products is mixed with 0.1-10 wt.% of blood plasma powder obtainable by the method of claim 1, after which the mixture is allowed to rest until it has the desired increased viscosity and/or consistency.

## Patentansprüche

1. Verfahren zur Herstellung eines Blutplasmapulvers, **dadurch gekennzeichnet, dass** (1) ein Fibrinogen-Konzentrat, das einen Fibrinogengehalt von mindestens 1 Gew.-% aufweist, aus Blutplasma hergestellt wird, und dass (2) das Fibrinogen-Konzentrat sprühgetrocknet wird, um ein Pulver zur Verwendung in Nahrungsmitteln auf solche Weise zu bilden, dass die Temperatur des Fibrinogens selbst bei weniger als 60°C gehalten wird.

2. Verfahren nach Anspruch 1, **dadurch gekennzeichnet, dass** das Fibrinogen-Konzentrat in einem Zerstäubungstrockner sprühgetrocknet wird, der auf Temperaturen zwischen 70 und 200°C eingestellt ist, und dass das erhaltene Pulver während weniger als 5 Minuten auf eine Temperatur von weniger als 50°C abgekühlt wird.

3. Verfahren nach Anspruch 2, **dadurch gekennzeichnet, dass** die Sprühtrocknung in einem Zerstäubungstrockner mit einer Einlasstemperatur von 120 bis 200°C und einer Auslasstemperatur von 70 bis 95°C stattfindet.

4. Verfahren nach Anspruch 2 oder Anspruch 3, **dadurch gekennzeichnet, dass** das nach dem Sprühtrocknen erhaltene Blutplasmapulver während weniger als 45 Sekunden auf eine Temperatur von weniger als 50°C abgekühlt wird.

5. Verfahren nach einem der Ansprüche 1 bis 4, **dadurch gekennzeichnet, dass** das Blutplasmapulver fluidifiziert und mit Wasser befeuchtet wird, wonach das Wasser aus den so erhaltenen agglomerierten Pulverteilchen verdampft wird, während Verfahrenstemperaturen von 15 bis 120°C verwendet werden.

6. Verfahren nach Anspruch 5, **dadurch gekennzeichnet, dass** Verfahrenstemperaturen von 30 bis 80°C verwendet werden.

7. Verfahren nach Anspruch 5 oder Anspruch 6, **dadurch gekennzeichnet, dass** dem Wasser ein Bindemittel, ausgewählt aus der Gruppe bestehend aus Zucker, Proteinen oder Lecithinen, zugefügt wird.

8. Verfahren zum Zusammenkleben von Nahrungsmittelstücken unter Verwendung von Fibrinogen, **dadurch gekennzeichnet, dass** trockenes Blutplasmapulver, das einen erhöhten Fibrinogengehalt aufweist, auf die Nahrungsmittelstücke appliziert wird, wonach die so behandelten Nahrungsmittelstücke ruhen gelassen werden, bis sie mit einander verklebt sind.

9. Verfahren nach Anspruch 8, **dadurch gekennzeichnet, dass** die Applikation und das Zusammerikleben bei einer Temperatur von 0 bis 30°C durchgeführt werden.

10. Verfahren nach Anspruch 8 oder Anspruch 9, **dadurch gekennzeichnet, dass** 1 bis 10 Gew.-% Calciumchlorid, berechnet auf der Basis des Gewichts des Blutplasinapulvers, dem Blutplasmapulver zugegeben werden.

11. Verfahren nach einem der Ansprüche 8 bis 10, **dadurch gekennzeichnet, dass** Stücke von Fleisch oder Fisch benetzt werden.

12. Verfahren nach einem der Ansprüche 8 bis 10, **dadurch gekennzeichnet, dass** Gemüsestücke zusammengeklebt werden.

13. Verfahren nach einem der Ansprüche 8 bis 12, **dadurch gekennzeichnet, dass** nach dem Benetzen Stücke mit einem Gewicht von weniger als 500 g, gemischt und danach in eine Form gegeben werden, in der das Verkleben ermöglicht wird.

14. Verfahren nach einem der Ansprüche 8- bis 12, **dadurch gekennzeichnet, dass** nach dem Benetzen Stücke mit einem Gewicht von mehr als 500 g in Kontakt mit einander gebracht werden, wonach ermöglicht wird, dass das Zusammenkleben stattfindet.

15. Verfahren zum Erhöhen der Konsistenz eines flüssigen oder halbfesten Nahrungsmittels, **dadurch gekennzeichnet, dass** das flüssige oder halbfeste Nahrungsmittel mit trockenem Blutplasmapulver, erhältlich nach dem Verfahren des Anspruchs 1, gemischt wird, das einen erhöhten Fibrinogengehalt aufweist, wonach das so behandelte Nahrungsmittel in Ruhe gelassen wird, bis es die gewünschte erhöhte Konsistenz aufweist.

16. Verfahren nach Anspruch 15, **dadurch gekennzeichnet, dass** 5 bis 10 Gew.-% Blutplasmapulver, erhältlich nach dem Verfahren des Anspruchs 1, in einen Brotteig geknetet wird, wonach der geknetete Teig ruhen gelassen wird, bis er die gewünschte erhöhte Konsistenz aufweist.

17. Verfahren nach Anspruch 15, **dadurch gekennzeichnet, dass** 0,1 bis 5 Gew.-% Blutplasmapulver, erhältlich nach dem Verfahren des Anspruchs 1, in einen Wurstteig geknetet wird, wonach der geknetete Wurstteig in Ruhe gelassen wird, bis er die gewünschte erhöhte Konsistenz aufweist.

18. Verfahren nach Anspruch 15, **dadurch gekennzeichnet, dass** 0,1 bis 10 Gew.-% Blutplasmapulver, erhältlich nach dem Verfahren des Anspruchs 1, in einen Kollagenpastenteig geknetet wird, wonach der geknetete Teig ruhen gelassen wird, bis er die gewünschte erhöhte Konsistenz aufweist.

19. Verfahren nach Anspruch 15, **dadurch gekennzeichnet, dass** ein Nahrungsmittel auf der Basis von Milchprodukten mit 0,1 bis 10 Gew.-% Blutplasmapulver, erhältlich nach dem Verfahren des Anspruchs 1, gemischt wird, wonach die Mischung ruhen gelassen wird, bis sie die gewünschte erhöhte Viskosität und/oder Konsistenz aufweist.

## Revendications

1. Procédé de préparation d'une poudre de plasma sanguin, **caractérisé en ce que** (1) un concentré de fibrinogène ayant une teneur en fibrinogène d'au moins 1% par poids est préparé à partir de plasma sanguin et **en ce que** (2) ledit concentré de fibrinogène est séché par atomisation pour former une poudre, apparemment destinée à être utilisée dans des denrées alimentaires de telle sorte que la température du fibrinogène lui-même est maintenue en dessous de 60°C.

2. Procédé selon la revendication 1, **caractérisé en ce que** le concentré de fibrinogène est séché par atomisation dans un appareil de séchage par atomisation réglé à des températures de 70 à 200°C et **en ce que** la poudre obtenue est refroidie à une température inférieure à 50°C pendant moins de 5 minutes.

3. Procédé selon la revendication 2, **caractérisé en ce que** ledit séchage par atomisation a lieu dans un appareil de séchage par atomisation avec une température d'entrée de 120-200°C et une température de sortie de 70-95°C.

4. Procédé selon la revendication 2 ou la revendication 3, **caractérisé en ce que** la poudre de plasma sanguin obtenue après le séchage par atomisation est refroidie à une température inférieure à 50°C pendant moins de 45 secondes.

5. Procédé selon l'une quelconque des revendications 1 à 4, **caractérisé en ce que** la poudre de plasma sanguin est fluidisée et humidifiée à l'eau, après quoi l'eau est évaporée des particules de poudre agglomérées ainsi obtenues, tout en utilisant des températures de traitement de 15-120°C.

6. Procédé selon la revendication 5, **caractérisé en ce qu'**on utilise des températures de traitement de 30-80°C.

7. Procédé selon la revendication 5 ou la revendication 6, **caractérisé en ce qu'**un liant sélectionné à partir du groupe de sucres, protéines ou lécithines est ajouté à l'eau.

8. Procédé utilisé pour lier ensemble des morceaux de denrées alimentaires en utilisant du fibrinogène, **caractérisé en ce que** la poudre sèche de plasma sanguin ayant une teneur élevée en fibrinogène est appliquée à des morceaux de denrées alimentaires, après quoi on laisse reposer les morceaux de denrées alimentaires ainsi traités jusqu'à ce qu'ils soient liés ensemble.

9. Procédé selon la revendication 8, **caractérisé en ce que** ladite application et ladite opération de liaison sont effectuées à une température de 0 - 30°C.

10. Procédé selon la revendication 8 ou la revendication 9, **caractérisé en ce que** 1 à 10% par poids de chlorure de calcium, calculé sur la base du poids de la poudre de plasma sanguin, est ajouté à la poudre de plasma sanguin.

11. Procédé selon l'une quelconque des revendications 8 à 10, **caractérisé en ce que** des morceaux de viande ou de poisson sont projetés.

12. Procédé selon l'une quelconque des revendications 8 à 10, **caractérisé en ce que** des morceaux de légumes sont liés ensemble.

13. Procédé selon l'une quelconque des revendications 8 à 12, **caractérisé en ce que**, après avoir été projetés, des morceaux pesant moins de 500 g sont mélangés et placés ensuite dans un moule dans lequel la liaison peut être effectuée.

14. Procédé selon l'une quelconque des revendications 8 à 12, **caractérisé en ce que**, après avoir été projetés, des morceaux pesant moins de 500 g sont mis en contact les uns avec les autres après quoi la liaison peut être effectuée.

15. Procédé d'augmentation de la consistance d'une denrée alimentaire liquide ou semi-solide, **caractérisé en ce que** la denrée alimentaire liquide ou semi-solide est mélangée avec de la poudre sèche de plasma sanguin pouvant être obtenue par le procédé de la revendication 1 ayant une teneur élevée en fibrinogène, après quoi on laisse reposer la denrée alimentaire ainsi traitée jusqu'à ce qu'elle ait la consistance supérieure désirée.

16. Procédé selon la revendication 15, **caractérisé en ce que** 5 à 10% en poids de poudre de plasma sanguin, pouvant être obtenue par le procédé de la revendication 1, est pétri en une pâte à pain, après quoi on laisse reposer la pâte pétrie jusqu'à ce qu'elle ait la consistance supérieure désirée.

17. Procédé selon la revendication 15, **caractérisé en ce que** 0,1 à 5% en poids de poudre de plasma sanguin pouvant être obtenue par le procédé de la revendication 1, est pétri en pâte à saucisse, après quoi on laisse reposer la pâte à saucisse pétrie jusqu'à ce qu'elle ait la consistance supérieure désirée.

18. Procédé selon la revendication 15, **caractérisé en ce que** 0,1 à 10% en poids de poudre de plasma sanguin pouvant être obtenue par le procédé de la revendication 1, est pétri en une pâte à pain, après quoi on laisse reposer la pâte de collagène jusqu'à ce qu'elle ait la consistance supérieure désirée.

19. Procédé selon la revendication 15, **caractérisé en ce qu'**une denrée alimentaire reposant sur des produits laitiers est mélangée avec 0,1 à 10% en poids de poudre de plasma sanguin, pouvant être obtenue par le procédé de la revendication 1 après quoi on peut laisser reposer le mélange jusqu'à ce qu'il ait la viscosité et/ou la consistance supérieure désirée.
